(19) Europäisches Patentamt
European Patent Office
Office européen des brevets

(11) **EP 3 483 187 A1**

## (12) EUROPEAN PATENT APPLICATION
published in accordance with Art. 153(4) EPC

(43) Date of publication:
**15.05.2019 Bulletin 2019/20**

(21) Application number: **17823925.7**

(22) Date of filing: **06.06.2017**

(51) Int Cl.:
*C08F 2/00* *(2006.01)*    *C08F 36/04* *(2006.01)*

(86) International application number:
**PCT/JP2017/021032**

(87) International publication number:
**WO 2018/008318 (11.01.2018 Gazette 2018/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.07.2016 JP 2016135495**

(71) Applicant: **Bridgestone Corporation**
**Tokyo 104-8340 (JP)**

(72) Inventor: **NAKATANI, Kenji**
**Tokyo 104-8340 (JP)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

## (54) METHOD FOR PRODUCING POLYMER

(57)    A method for producing a polymer according to the present invention is a method for producing a polymer having at least two peaks in a molecular weight distribution curve of the polymer obtained by measurement of molecular weight by GPC, and comprising a conjugated diene-based polymer or a copolymer of an aromatic vinyl compound and a diene-based compound, the method using a reaction apparatus comprising two or more continuous polymerization reactors connected in series, and comprising introducing a monomer component and a polymerization initiator into a first reactor for a polymerization reaction, and then adding the monomer component and the polymerization initiator before each of the second and subsequent reactors for polymerization, a weight average molecular weight of a polymer (A) obtained in the first reactor being 300,000 to 2,000,000.

[Fig. 1]

**Description**

Technical Field

The present invention relates to a method for producing a polymer. Particularly, the present invention relates to a method for producing a polymer having at least two types of molecular weight peaks in the molecular weight distribution curve of the polymer obtained by the measurement of molecular weight by GPC.

Background Art

In recent years, in connection with a social request for energy saving, the demand for lower fuel consumption of automobiles has been becoming more stringent. In order to address such a demand, also for tire properties, further reduction of rolling resistance is required while operation stability is maintained. The methods for reducing the rolling resistance of a tire include a method such as optimizing the tire configuration, but a method using a material having lower heat generation properties as a rubber composition is most common.

In order to achieve a high degree of balance between steering stability and abrasion resistance, blending a low molecular weight polymer having a molecular weight of 50,000 to 150,000, instead of oil, into a conventional rubber component is proposed. A tire using a rubber composition comprising a rubber component containing a low molecular weight polymer has improved properties such as low heat generation properties, abrasion resistance, and operation stability. For a polymer having at least two molecular weight peaks in the molecular weight distribution curve of the polymer obtained by the measurement of molecular weight by GPC, the method of synthesizing polymers having particular molecular weights in different reactors respectively, and blending them is adopted (for example, Patent Literature 1).

Citation List

Patent Literature

PTL 1: WO 2005/087858

Summary of Invention

Technical Problem

When a mixture of a high molecular weight polymer and a low molecular weight polymer is produced, conventionally, the low molecular weight polymer and the high molecular weight polymer are produced in separate reactors and then transferred to a mixer and blended. Therefore, problems are that in addition to the reactors, the mixer is necessary, and the number of steps increases, and therefore the productivity is low. On the other hand, there is a method for producing two types of polymers having different molecular weights by continuous polymerization, but the molecular weight distribution of the obtained polymer is wide, and it is difficult to control particularly the molecular weight and molecular weight distribution of the low molecular weight polymer, in the polymer having two desired molecular weight peaks.

The present invention has been made from these points to be noted, and it is an object of the present invention to provide a method for producing a polymer having at least two molecular weight peaks in the molecular weight distribution curve of the polymer obtained by the measurement of molecular weight by GPC, in which the molecular weight distribution of the low molecular weight polymer is narrow.

Solution to Problem

The present inventor has studied diligently over and over in order to achieve the above object, and as a result found that a mixture having at least two types of molecular weight peaks in the molecular weight distribution curve of a polymer obtained by the measurement of molecular weight by GPC, and containing a low molecular weight polymer having narrow molecular weight distribution is obtained by continuous polymerization by producing a high molecular weight polymer, and then introducing a monomer component for low molecular weight polymer production and a polymerization initiator into the reaction system of the high molecular weight polymer, and producing a low molecular weight polymer in a plug flow. The "plug flow" will be described later. The present invention has been completed based on such a finding.

Specifically, the present invention provides

[1] a method for producing a polymer having at least two peaks in a molecular weight distribution curve of the polymer obtained by measurement of molecular weight by GPC, and comprising a conjugated diene-based polymer or a copolymer of an aromatic vinyl compound and a diene-based compound, the method
using a reaction apparatus comprising two or more continuous polymerization reactors connected in series, and comprising introducing a monomer component and a polymerization initiator into a first reactor for a polymerization reaction, and then continuously or intermittently adding the monomer component and the polymerization initiator before each of second and subsequent reactors for polymerization,
a weight average molecular weight of a polymer (A) obtained in the first reactor being 300,000 to 2,000,000.

Advantageous Effects of Invention

According to the present invention, it is possible to provide a method for producing a polymer having at least two molecular weight peaks in which the ratio of the weight average molecular weight (Mw) to the number average molecular weight (Mn) (hereinafter also referred to as "Mw/Mn") of the low molecular weight polymer is small.

Brief Description of Drawings

Fig. 1 is a schematic configuration diagram showing one example of a reaction apparatus used in a method for producing a polymer according to the present invention.
Fig. 2 is a schematic configuration diagram showing another example of the reaction apparatus used in the method for producing a polymer according to the present invention.
Fig. 3 is a schematic diagram of a GPC chart showing one example of the GPC curve of a polymer obtained by the present invention.
Fig. 4 is a diagram for explaining a method for calculating the proportion of the low molecular weight region of a polymer obtained by the present invention.

Description of Embodiment

[Method for Producing Polymer]

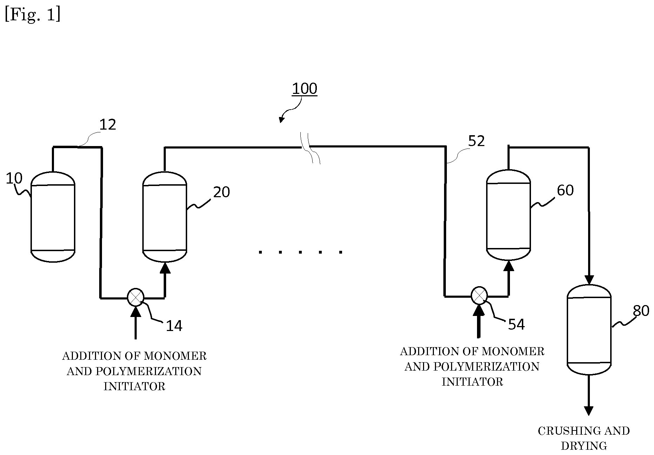

A method for producing a polymer according to the present invention is particularly a method for producing a polymer having two molecular weight peaks in the molecular weight distribution curve of the polymer obtained by the measurement of molecular weight by GPC, and comprising a conjugated diene-based polymer or a copolymer of an aromatic vinyl compound and a diene-based compound, the method using a reaction apparatus 100 comprising two or more continuous polymerization reactors 10, 20, and 60 connected in series as shown in Fig. 1, and comprising introducing a monomer component and a polymerization initiator into the first reactor 10 for a polymerization reaction, and then continuously or intermittently adding the monomer component (hereinafter also referred to as a "monomer") and the polymerization initiator from valves 14 and 54 before the respective second and subsequent reactors 20 and 60 for polymerization, the weight average molecular weight of the polymer (A) obtained in the first reactor being 300,000 to 2,000,000. The obtained polymer is fed to a mixer 80.
It is considered that by producing a high molecular weight polymer, and then introducing a monomer component for low molecular weight polymer production and a polymerization initiator into the reaction system of the high molecular weight polymer, and producing a low molecular weight polymer in a plug flow, a mixture having at least two molecular weight peaks measured by GPC, and containing a low molecular weight polymer having small Mw/Mn, that is, a polymer (B), can be obtained.
Here, the "plug flow" refers to a flow having a constant rate in a direction at a right angle to the wall surface of a flow path. In other words, in the plug flow, the flow rate is the same both on the wall surface side of the flow path and in the center of the flow path.
The weight average molecular weight of the polymer (A) obtained in the first reactor 10, the flow rate of the feed of the polymer (A) to the second reactor 20, the viscosity of the polymer (A), and the like are controlled so as to form a plug flow.
The weight average molecular weight of the polymer (A) obtained in the first reactor 10 in this embodiment is 300,000 to 2,000,000, and preferably 500,000 to 1,500,000, more preferably 500,000 to 1,300,000, and further preferably 650,000 to 1,300,000 considering processability. The measurement of molecular weight and molecular weight distribution by GPC will be described later.
The solution concentration is preferably 15% by mass or more though depending on the weight average molecular weight of the synthesized polymer.

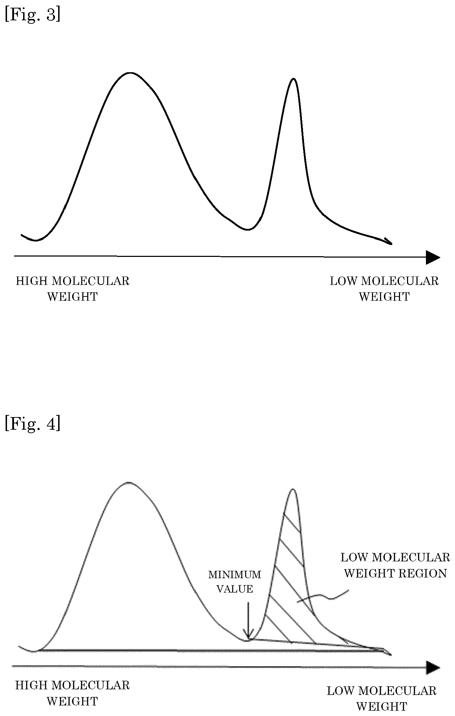

By controlling the weight average molecular weight of the polymer (A) obtained in the first reactor in the above range, in the second reactor, the above-described "plug flow" is formed, and polymerization occurs while the monomer and the polymerization initiator added at the valve 14 move along the flow of the polymer (A) with substantially no backflow. Therefore, a low molecular weight polymer having small Mw/Mn as shown in Fig. 3, that is, the polymer (B), can be produced. Differential molecular weight curves as illustrated in Figs. 3 and 4 are obtained herein from a GPC method, and in the present invention, at least two molecular weight peaks are detected in these differential molecular weight curves.

In addition, by controlling the flow rate when feeding the polymer (A) obtained in the first reactor 10 in this embodiment to the second reactor 20 through piping 12, the plug flow is formed.

The flow rate of the feed of the polymer (A) obtained in the first reactor 10 is preferably appropriately adjusted according to the weight average molecular weight and viscosity of the polymer (A), and the like.

Further, it is considered that by connecting the first reactor 10 to the sixth reactor 60 in series, continuous polymerization can be performed, and the above-described "plug flow" can be formed, and therefore the Mw/Mn of the polymer (B) that is a molecular weight polymer as shown in Fig. 3 can be made small compared with a conventional one.

In addition, the weight average molecular weight of the polymer (B) obtained in the second reactor is preferably 5,000 to 200,000, more preferably 10,000 to 150,000, and further preferably 50,000 to 120,000 from the viewpoint of abrasion resistance.

In addition, the ratio of the weight average molecular weight (Mw) to the number average molecular weight (Mn) of the polymer (B) obtained in the second reactor 20 is preferably 1.80 or less, more preferably 1.50 or less, from the viewpoint of abrasion resistance. It is considered that as the above Mw/Mn becomes smaller, the amount of the polymer (B) having the desired molecular weight becomes larger, and therefore the abrasion resistance improves.

Further, in this embodiment, the polymer having at least two molecular weight peaks in the molecular weight distribution curve of the polymer obtained by the measurement of molecular weight by GPC, that is, the polymers (A) and (B), is preferably a conjugated diene-based polymer.

Examples of the conjugated diene-based polymer can include polyisoprene, polybutadiene rubbers (BR), and styrene-butadiene rubbers (SBR). Derivatives of these rubbers, for example, polybutadiene rubbers modified with tin compounds, and epoxy-modified products, silane-modified products, or maleated products of these rubbers are also used. These rubbers may be used singly, or two or more of these rubbers may be used in combination.

Further, as the conjugated diene-based polymer in this embodiment, a copolymer of an aromatic vinyl compound and a diene-based compound is preferred from the viewpoint of balance with other properties (for example, the wet properties of a tire).

Examples of the aromatic vinyl compound include styrene, p-methylstyrene, m-methylstyrene, p-tert-butylstyrene, α-methylstyrene, chloromethylstyrene, and vinyltoluene. Preferred examples include styrene, p-methylstyrene, and α-methylstyrene, and styrene is further preferred.

As the diene compound, butadiene, isoprene, pentadiene, 2,3-dimethylbutadiene, and the like are used, and particularly butadiene is preferred.

The polymers (A) and (B) in this embodiment can be obtained by various production methods as long as predetermined molecular structures are obtained. The polymer (A) is preferably liquid, and may be liquid with a solvent or the like.

The polymer (A) and the polymer (B) can be obtained by copolymerizing a diene compound such as 1,3-butadiene comprising a small amount of 1,2-butadiene and an aromatic vinyl compound in a hydrocarbon solvent in a tank type or tower type reactor using an organolithium compound as a polymerization initiator in the presence of an ether or a tertiary amine.

Further, in the polymers (A) and (B) in this embodiment, the amount of the aromatic vinyl compound is preferably 0 to 80% by mass, more preferably 10 to 60% by mass, and more preferably 20 to 50% by mass from the viewpoint of balance with other properties (for example, the wet properties of a tire).

In addition, in the polymers (A) and (B) in this embodiment, the amount of vinyl bonds of the diene-based compound is preferably 10 to 80% by mass, more preferably 15 to 60% by mass, and more preferably 30 to 50% by mass from the viewpoint of balance with other properties (for example, the wet properties of a tire) and the polymerization rate.

As the organolithium compound, hydrocarbyllithiums are preferred. By using a hydrocarbyllithium, a styrene-butadiene copolymer rubber having a hydrocarbyl group at the polymerization initiation end is obtained.

The hydrocarbyllithium should be one having a hydrocarbyl group having 2 to 20 carbon atoms. Examples thereof include ethyllithium, n-propyllithium, isopropyllithium, n-butyllithium, sec-butyllithium, tert-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, and the reaction product of diisopropenylbenzene and butyllithium.

In addition, any can be appropriately selected from among generally used known compounds and used, as a randomizer, as desired. Specific examples can include ethers and tertiary amines such as dimethoxybenzene, tetrahydrofuran, dimethoxyethane, diethylene glycol dibutyl ether, diethylene glycol dimethyl ether, 2,2-bis(2-tetrahydrofuryl)-propane, triethylamine, pyridine, N-methylmorpholine, N,N,N',N'-tetramethylethylenediamine, and 1,2-dipiperidinoethane. Potassium salts such as potassium-tert-amylate and potassium-tert-butoxide, and sodium salts such as sodium-tert-amylate can also be used.

The method for producing a styrene-butadiene copolymer by anionic polymerization is not particularly limited, and a conventionally known method can be used. Specifically, the target styrene-butadiene copolymer is obtained by anionically polymerizing styrene and 1,3-butadiene in an organic solvent inert to the reaction, for example, a hydrocarbon-based solvent such as an aliphatic, alicyclic, or aromatic hydrocarbon compound, with an organolithium compound as a polymerization initiator, in the presence of the above-described randomizer as desired. The temperature in this polymerization reaction is usually selected in the range of 80 to 130°C, preferably 90 to 110°C. The polymerization reaction can be performed under the generated pressure but is usually desirably operated at sufficient pressure to keep the monomers in a substantially liquid phase. Higher pressure can be used, and such pressure is obtained by an appropriate method such as pressurizing the reactor with a gas inert to the polymerization reaction.

In this embodiment, 5 to 60 parts by mass, more preferably 10 to 40 parts by mass, and further preferably 20 to 30 parts by mass of the polymer (B) obtained in the second reactor 20 is preferably contained per 100 parts by mass of the polymer (A) obtained in the first reactor 10 from the viewpoint of making the Mw/Mn of the polymer (B) small by setting the solution viscosity in the first reactor 10 at a certain value or more.

Examples

Next, the present invention will be described in more detail by Examples, but the present invention is not limited in any way by these examples. Various measurement and evaluation methods were performed based on the following methods.

<Molecular Weights>

The polystyrene equivalent number average molecular weight (Mn) and weight average molecular weight (Mw) of each polymer were obtained based on monodisperse polystyrene by gel permeation chromatography [GPC: HLC-8020 manufactured by Tosoh Corporation, columns: GMH-XL manufactured by Tosoh Corporation (two in series), detector: differential refractometer (RI)].

<Microstructure and Amount of Bonded Styrene>

The butadiene content (% by mass), the amount of vinyl bonds of a butadiene portion (% by mass), and the styrene content (% by mass) for a produced polymer were obtained from the integral ratio of the $^1$H-NMR spectrum.

<Calculation of Proportion (% by Mass) of Low Molecular Weight Region>

As shown in Fig. 4, a base line was drawn from the high molecular weight upper end to the low molecular weight lower end. Then, a line was connected from the minimum value before the lowest molecular weight peak of at least two types of molecular weight peaks (the valley portion between the high molecular weight peak and the low molecular weight peak) to the base line end on the low molecular weight side. Further, the total area of all molecular weight peaks was obtained based on the base line (the total area of the high molecular weight peak and the low molecular weight peak was obtained based on the base line), and on the other hand, the area of the low molecular weight peak, the oblique line portion, was obtained. Then, the ratio of the area of the low molecular weight peak to the total area of all molecular weight peaks was obtained to calculate the proportion (% by mass) of the low molecular weight region.

<Heat Generation Properties (tan $\delta$)>

An obtained rubber composition was vulcanized at 160°C for 20 minutes, and then the tan $\delta$ was measured at a temperature of 60°C, a dynamic strain of 5%, and a frequency of 15 Hz using a dynamic shear viscoelasticity measuring apparatus (manufactured by Rheometrics). The index was expressed by the following formula with the tan $\delta$ of Comparative Example 1 being 100. A smaller index value indicates lower heat generation properties and smaller hysteresis loss.

heat generation property index = [(tan $\delta$ of rubber composition under test)/(tan $\delta$ of rubber composition of Comparative Example 1)] $\times$ 100

<Abrasion Resistance>

An obtained rubber composition was vulcanized at 160°C for 20 minutes, and then the amount of abrasion was measured at a slip ratio of 25% and 23°C in accordance with JIS K 6264-2: 2005 using a Lambourn abrasion tester. The index was expressed by the following formula with the reciprocal of the amount of abrasion of Comparative Example 1 being 100. A larger index value indicates a smaller amount of abrasion and better abrasion resistance.

$$\text{abrasion resistance index} = [(\text{amount of abrasion of rubber composition of Comparative Example 1})/(\text{amount of abrasion of rubber composition under test})] \times 100$$

Table 1

| Blending formulation (parts by mass) | | | | Blending |
|---|---|---|---|---|
| First stage | Copolymer*1 | | | 137.5 |
| | Carbon black (ISAF-HS)*2 | | | 16 |
| | Silica*3 | | | 75 |
| | Silane coupling agent*4 | | | 6 |
| | Stearic acid | | | 2.0 |
| | Antioxidant 6C*5 | | | 1.0 |
| Second stage | Zinc oxide | | | 2.5 |
| | Vulcanization accelerator | DPG*6 | | 2.0 |
| | | DM*7 | | 1.1 |
| | | NS*8 | | 0.8 |
| | Sulfur | | | 1.6 |
| [Notes] *1: modified conjugated diene-based polymer: each polymer described in Table 2 was used. *2: carbon black: "DIABLACK N234" manufactured by Mitsubishi Chemical Corporation *3: silica: manufactured by Tosoh Silica Corporation: "AQ" *4: silane coupling agent: "Si69" manufactured by Degussa AG *5: antioxidant 6C: "NOCRAC 6C" manufactured by OUCHI SHINKO CHEMICAL INDUSTRIAL CO., LTD *6: vulcanization accelerator DPG: "NOCCELER D" manufactured by OUCHI SHINKO CHEMICAL INDUSTRIAL CO., LTD *7: vulcanization accelerator DM: "NOCCELER DM" manufactured by OUCHI SHINKO CHEMICAL INDUSTRIAL CO., LTD *8: vulcanization accelerator NS: "NOCCELER NS-F" manufactured by OUCHI SHINKO CHEMICAL INDUSTRIAL CO., LTD | | | | |

<Preparation and Evaluation of Rubber Composition>

Kneading was performed in the order of the first stage of kneading and the final stage of kneading with the blending formulation shown in Table 1, using a usual Banbury mixer, to produce a rubber composition. The highest temperature of the rubber composition at the first stage of kneading was 150°C, and the highest temperature of the rubber composition at the final stage of kneading was 110°C.

[Example 1]

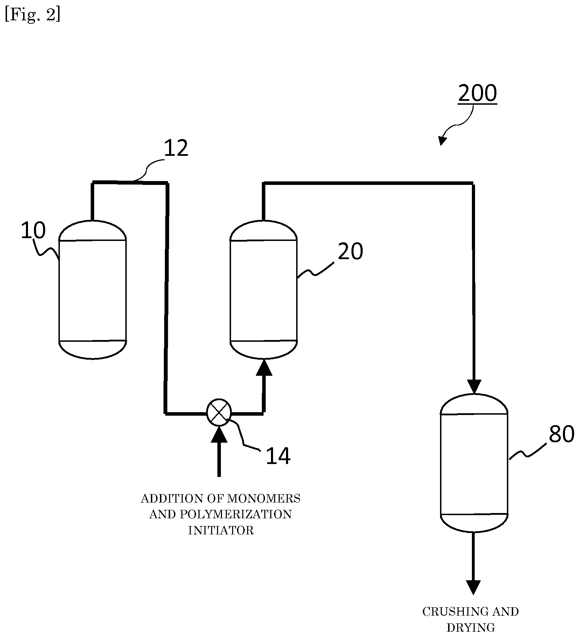

The copolymer used in the rubber composition of Example 1 was polymerized by solution polymerization as shown below, using the reaction apparatus 200 shown in Fig. 2. A hexane solution (a concentration of 18% by mass) comprising 38% by mass of a styrene monomer and 62% by mass of a butadiene monomer based on the total mass of monomers was supplied at 159 kg/h to the first reactor 10 having an internal volume of 76 L. Further, 3% by mass of n-butyllithium as a polymerization initiator was supplied at 175 g/h, and 0.39 equivalents of 1,2-butadiene and 0.99 equivalents of 2,2-di(tetrahydrofuranyl)propane in contrast to n-butyllithium were continuously supplied from the bottom of the first reactor 10. While the temperature at 2/3 of the reactor (the temperature measured on the side wall at a height of about 2/3 from the bottom) was held at 99°C, polymerization was performed for a residence time of 20 minutes.

Then, the polymer cement obtained in the above reaction was flowed to the second reactor 20 having an internal volume of 76 L, and through the valve 14 provided in the piping 12 between the first reactor 10 and the second reactor 20, 3% by mass of n-butyllithium as a polymerization initiator was further supplied at 1107 g/h, and a hexane solution (a concentration of 18% by mass) comprising 36% by mass of a styrene monomer and 64% by mass of a butadiene monomer was supplied at 43 kg/h.

Isopropanol was added to the polymer cement obtained in the above reaction, to stop the polymerization reaction, and 2,6-di-t-butyl-4-cresol (BHT) as an antioxidant was added, and then the polymer cement was held in a blending tank for about 2 hours. Then, the polymer cement was subjected to solvent removal and dried to obtain a copolymer.

For the final copolymer obtained from the mixing tank 80 through the second reactor 20, the amount of bonded styrene was 39.0% by mass, the amount of the butadiene component based on the total amount of the copolymer was 61.0% by mass, and the vinyl bond content was 40.5% by mass. For the polymer cement sampled from the top of the first reactor 10, the amount of bonded styrene was 40.2% by mass, the amount of the butadiene component based on the total amount of the copolymer was 59.8% by mass, and the vinyl bond content was 42.0% by mass. The evaluation results of a tire having a tread obtained using the composition in Table 1 are shown in Table 2.

[Comparative Example 1]

In Example 1, the polymer cement after the polymerization by the first reactor 10 was flowed to a blending tank, isopropanol was added to stop the polymerization reaction, 2,6-di-t-butyl-4-cresol (BHT) as an antioxidant was added, and then the polymer cement was held in the blending tank (not shown) for about 2 hours. Then, a predetermined amount of oil was added to the polymer cement, and the polymer cement was subjected to solvent removal and dried to obtain a copolymer. The evaluation results of a tire having a tread obtained using the composition in Table 1 are shown in Table 2.

[Example 2 and Comparative Example 2]

In Example 1, polymerization was carried out with the amounts of introduced agents changed as shown in Table 2, thereby obtaining a copolymer. The evaluation results of a tire having a tread obtained using the composition in Table 1 are shown in Table 2.

Table 2

| Production example | | Example 1 | Comparative Example 1 | Example 2 | Comparative Example 2 |
|---|---|---|---|---|---|
| Copolymer | | 1 | 2 | 3 | 4 |
| First reactor | Weight proportion of introduced styrene | 38 | 38 | 38 | 38 |
| | Weight proportion of introduced 1,3-butadiene | 62 | 62 | 62 | 62 |
| | n-Butyllithium (g/hr) | 175 | 175 | 277 | 554 |
| | 1,2-Butadiene (mol ratio) | 0.39 | 0.41 | 0.40 | 0.42 |
| | 2,2-Di(tetrahydrofuranyl)propane (mol ratio) | 0.99 | 0.98 | 0.94 | 0.98 |
| | Monomer concentration (wt%) | 20 | 20 | 20 | 20 |
| | Yield (%) | >98 | >98 | >98 | >98 |

(continued)

| Production example | | Example 1 | Comparative Example 1 | Example 2 | Comparative Example 2 |
|---|---|---|---|---|---|
| Copolymer | | 1 | 2 | 3 | 4 |
| Second reactor | Weight proportion of introduced styrene | 36 | - | 36 | 36 |
| | Weight proportion of introduced 1,3-butadiene | 64 | - | 64 | 64 |
| | n-Butyllithium (mmol/h) | 1107 | - | 1107 | 1107 |
| Properties of copolymer | St after polymerization in first reactor (% by mass) | 40.2 | 40.2 | 39.5 | 39.8 |
| | Amount of vinyl bonds after polymerization in first reactor (% by mass) | 42.0 | 42.0 | 41.7 | 42.1 |
| | St after polymerization in second reactor (% by mass) | 39.0 | - | 38.4 | 38.7 |
| | Amount of vinyl bonds after polymerization in second reactor (% by mass) | 40.5 | - | 40.2 | 41.0 |
| | Mw of high molecular weight region [k] | 685 | 685 | 512 | 284 |
| | Mw of low molecular weight region [k] | 78 | - | 81 | 75 |
| | Mw/Mn of low molecular weight region | 1.19 | - | 1.25 | 1.98 |
| | Proportion of low molecular weight region (wt%) | 26.7 | - | 27.1 | 26.8 |
| | Oil (wt%) | - | 27.1 | - | - |
| Physical properties after vulcanization | | | | | |
| tan $\delta$ (50°C) (index) | | 86 | 100 | 92 | 98 |
| Abrasion resistance (index) | | 132 | 100 | 124 | 98 |

From the results of Example 1 and Comparative Example 1, it is found that a tire using a rubber composition containing a rubber component comprising a low molecular weight polymer (B) having small Mw/Mn instead of oil has improved low heat generation properties and abrasion resistance.

From the results of Examples 1 and 2 and Comparative Example 2, it is found that when the Mw/Mn of the low molecular weight polymer (B) was 1.80 or less, a tire using a rubber composition containing this rubber component has more improved low heat generation properties and abrasion resistance.

Industrial Applicability

The method for producing a polymer according to the present invention is expected to be used in tire applications such as tires, and rubber members forming the interiors of tire shells, as well as applications such as vibration-proof rubbers, fenders, belts, hoses, and other industrial products.

Reference Signs List

10 first reactor, 12, 52 piping, 14, 54 valve, 20 second reactor, 60 sixth reactor, 80 mixer.

**Claims**

1. A method for producing a polymer having at least two peaks in a molecular weight distribution curve of the polymer obtained by measurement of molecular weight by GPC, and comprising a conjugated diene-based polymer or a copolymer of an aromatic vinyl compound and a diene-based compound, the method
using a reaction apparatus comprising two or more continuous polymerization reactors connected in series, and comprising introducing a monomer component and a polymerization initiator into a first reactor for a polymerization reaction, and then continuously or intermittently adding the monomer component and the polymerization initiator before each of the second and subsequent reactors for polymerization,
a weight average molecular weight of a polymer (A) obtained in the first reactor being 300,000 to 2,000,000.

2. The method for producing a polymer according to claim 1, wherein a weight average molecular weight of a polymer (B) obtained in the second reactor is 5,000 to 200,000.

3. The method for producing a polymer according to claim 2, wherein a ratio of a weight average molecular weight (Mw) to a number average molecular weight (Mn) of the polymer (B) obtained in the second reactor is 1.80 or less.

4. The method for producing a polymer according to claim 2 or 3, wherein a ratio of a weight average molecular weight (Mw) to a number average molecular weight (Mn) of the polymer (B) obtained in the second reactor is 1.50 or less.

5. The method for producing a polymer according to any one of claims 1 to 4, wherein in the polymers (A) and (B), an amount of the aromatic vinyl compound is 0 to 80% by mass, and an amount of vinyl bonds of the diene-based compound is 10 to 80% by mass.

6. The method for producing a polymer according to any one of claims 1 to 5, wherein 5 to 60 parts by mass of the polymer (B) obtained in the second reactor is contained per 100 parts by mass of the polymer (A) obtained in the first reactor.

[Fig. 1]

[Fig. 2]

ADDITION OF MONOMERS
AND POLYMERIZATION
INITIATOR

CRUSHING AND
DRYING

[Fig. 3]

HIGH MOLECULAR
WEIGHT

LOW MOLECULAR
WEIGHT

[Fig. 4]

LOW MOLECULAR
WEIGHT REGION

MINIMUM
VALUE

HIGH MOLECULAR
WEIGHT

LOW MOLECULAR
WEIGHT

## INTERNATIONAL SEARCH REPORT

| | International application No. |
|---|---|
| | PCT/JP2017/021032 |

### A. CLASSIFICATION OF SUBJECT MATTER
*C08F2/00*(2006.01)i, *C08F36/04*(2006.01)i

According to International Patent Classification (IPC) or to both national classification and IPC

### B. FIELDS SEARCHED

Minimum documentation searched (classification system followed by classification symbols)
C08F2/00, C08F36/04

Documentation searched other than minimum documentation to the extent that such documents are included in the fields searched
Jitsuyo Shinan Koho      1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)
CAplus/REGISTRY(STN)

### C. DOCUMENTS CONSIDERED TO BE RELEVANT

| Category* | Citation of document, with indication, where appropriate, of the relevant passages | Relevant to claim No. |
|---|---|---|
| Y | JP 55-40712 A  (Asahi Chemical Industry Co., Ltd.), 22 March 1980 (22.03.1980), claims; page 6, upper left column, lines 6 to 19; examples (Family: none) | 1-6 |
| Y | JP 57-180615 A  (Sumitomo Chemical Co., Ltd.), 06 November 1982 (06.11.1982), examples & US 4537936 A examples & EP 64400 A2          & DE 3280212 D & CA 1208838 A | 1-6 |

☒  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 June 2017 (27.06.17) | 04 July 2017 (04.07.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/021032 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 7-233228 A (Bridgestone Corp.), 05 September 1995 (05.09.1995), the entire specification & US 5891947 A the entire specification & EP 603668 A1 | 1-6 |
| A | JP 2001-11127 A (Ube Industries, Ltd.), 16 January 2001 (16.01.2001), the entire specification (Family: none) | 1-6 |
| P,A | WO 2016/158084 A1 (Ube Industries, Ltd.), 06 October 2016 (06.10.2016), the entire description & JP 2017-88905 A & TW 201638115 A | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005087858 A